# EUROPEAN PATENT SPECIFICATION

(11) **EP 2 794 359 B1**
(45) Date of publication and mention of the grant of the patent: **23.08.2017**
(21) Application number: 11878001.4
(22) Date of filing: 21.12.2011
(51) Int. Cl.: B60R 21/0136, B60R 19/48

(54) **A VEHICLE PEDESTRIAN IMPACT SENSOR ARRANGEMENT**
FAHRZEUG MIT FUSSGÄNGERAUFPRALLSENSORANORDNUNG
AGENCEMENT DE CAPTEUR D'IMPACT ENTRE UN VÉHICULE ET UN PIÉTON

(43) Date of publication of application: 29.10.2014
(73) Proprietor: Autoliv Development AB, 447 83 Vårgårda (SE)
(72) Inventor: HÖFELSAUER, Herbert, 81667 München (DE); KOLLMER, Norbert, 85737 Ismaning (DE)
(74) Representative: Sandstedt, Jonas Sven James
(86) International application number: PCT/SE2011/051552
(87) International publication number: WO 2013/095223

(56) References cited:
- US-A- 3 794 997
- US-A- 4 951 985
- US-A1- 2001 028 163
- US-A1- 2009 001 976
- US-B1- 6 169 479
- US-B2- 7 828 350

## Description

### TECHNICAL FIELD

The present invention relates to a vehicle impact sensor arrangement adapted to detect an impact between a vehicle and a pedestrian, the vehicle having a forward direction of movement. The sensor arrangement comprises a vehicle bumper absorbing material and a vehicle bumper beam which have a respective longitudinal extension that mainly extends across the forward direction of movement. The sensor arrangement further comprises a sensor device.

Vehicle manufacturers are faced with the task of providing pedestrian protection, such that pedestrians who are hit by a vehicle in the event of an accident suffer as little injuries as possible. It has been observed that if a motor vehicle hits a pedestrian, the bumper of the vehicle often hits the legs or lower torso of the pedestrian. Hence, the legs of the pedestrian will normally be pushed in the travel direction of the vehicle, and the head and upper torso will normally be tilted towards the hood and windscreen of the vehicle. This tilting movement often causes the head or upper torso of the pedestrian to first make contact with the hood and thereafter, if the impact force from the hit is strong enough and the vehicle continues forward, also reach the windscreen.

The engine hood has been suited to absorb the collision force acting on a pedestrian, but due to a quite small clearance distance between the mostly very hard engine compartment equipment and the hood, the deformation path of the hood is limited. This means that a pedestrian that is hit by a vehicle and who strikes the hood, probably will be injured by the underlying cylinder head or some other heavy, non-resilient structure under the hood.

In order to counteract this, vehicle hoods have been developed such that, in the event of a frontal accident involving a pedestrian, they are moved from a normal position to a raised position. The hood is then raised approximately 10 cm to 15 cm, normally at the rear end of the hood, such that the hood in its raised position has an inclination that decreases from the vehicle windscreen towards the front of the vehicle. This inclination also serves to guide the pedestrian towards the windscreen, which has been found to provide good absorption of collision forces. Hood lifting arrangements are for example disclosed in WO 2007/067 121 and EP 2 256 007.

In order to achieve such a raising of the engine hood, it is necessary to provide sensors that quickly and reliably detect a pedestrian and a fast-acting hood raising, normally driven by a pyrotechnical charge.

In the same way, windscreen airbags may be deployed in order to protect a pedestrian from hitting rigid structures such as for examples the A-pillars. It is important that these airbags are not deployed incorrectly, since they probably would prevent a driver from seeing the road and detecting blocking objects.

Sensors that have been used previously have been based on pressure change in an enclosed space behind a front bumper of a vehicle, as described in US 7828350. Other previously known sensors at this position include fiber optic sensors, piezoelectric films which produce electric current when bent and conductive materials which produce different impedances when stressed or deformed. It has also been proposed to use sound waves in a cavity, emitted by a transmitter and received by a receiver, the receiver being able to detect changes of the sound waves that are due to a collision with a pedestrian.

US 6169479 discloses an impact sensors, system that uses a piezo-electric sensor arrangement, and US 2009/001976 discloses an impact sensor according to the preamble of claim 1, wherein it comprises a magnetic crash sensor where magnetic sensors are affected by a varying magnetic field that is generated by one or more coils.

However, all these prior techniques suffer from disadvantages due to temperature sensitivity and/or slow response time.

It is therefore the object of the present invention to provide a sensor system for detecting a pedestrian collision in the front region of a motor vehicle that is temperature robust and has a quick response time, where the position of the impact in the bumper can be detected.

This object is achieved by means of a vehicle impact sensor arrangement as defined in claim 1.

The absorbing material may comprise a channel, into which the microwave conductor arrangement is positioned. The microwave conductor arrangement may for example be constituted by a waveguide, a microstrip arrangement, a stripline arrangement or a coaxial conductor.

The absorbing material may alternatively comprise electrically conducting walls and constitute the waveguide.

According to an example, a microwave signal generator is connected to the first port of the microwave conductor arrangement. Furthermore, a first microwave signal receiver is connected to the second end of the microwave conductor arrangement and/or a second microwave signal receiver is connected to the first end of the microwave conductor arrangement.

Other examples and details are disclosed in the dependent claims.

A number of advantages are provided by means of the present invention. For example:
- High reliability;
- Self-monitoring ability;
- Uncomplicated installation;
- Short response time; and
- Robustness to environmental conditions.

### BRIEF DESCRIPTION OF THE DRAWINGS

The present invention will now be described more in detail with reference to the appended drawings, where:
- Figure 1: shows a schematic side view of a vehicle before activation of a hood lifting actuator;
- Figure 2: shows a schematic side view of a vehicle after activation of a hood lifting actuator;
- Figure 3: shows a schematic exploded top view of a vehicle bumper according to the present invention;
- Figure 4: shows a schematic top view of a first type of vehicle bumper according to the present invention;
- Figure 5: shows a schematic section of Figure 4, showing a first type of bumper waveguide;
- Figure 6: shows a schematic section of Figure 4, showing a second type of bumper waveguide;
- Figure 7: shows a schematic top view of a second type of vehicle bumper according to the present invention;
- Figure 8: shows a schematic section of Figure 7, showing a third type of bumper waveguide;
- Figure 9: shows a schematic section of Figure 4, showing a bumper stripline arrangement;
- Figure 10: shows a schematic section of Figure 4, showing a first bumper microstrip arrangement;
- Figure 11: shows a schematic section of Figure 4, showing a second bumper microstrip arrangement; and
- Figure 12: shows a schematic section of Figure 4, showing a bumper coaxial cable arrangement.

### DETAILED DESCRIPTION

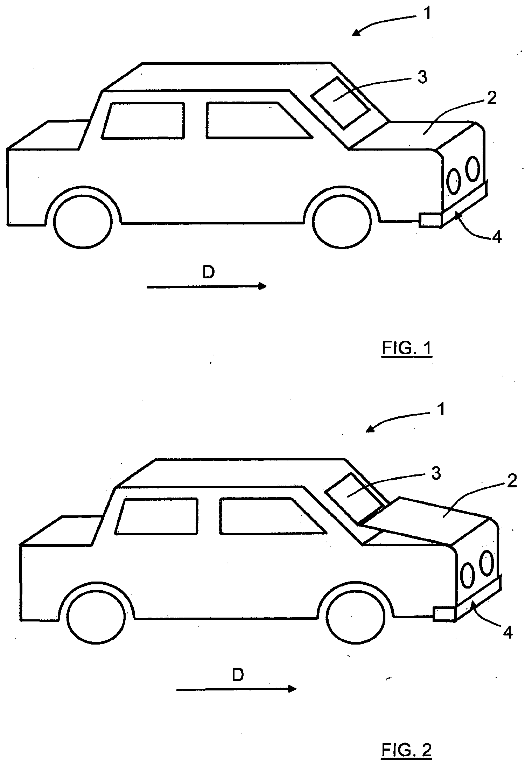

Figure 1 shows a vehicle 1 with a hood 2 and a windscreen 3 in a normal condition. The vehicle 1 has a forward direction of movement that is indicated with an arrow D. In the event of a collision with a pedestrian (not shown), the rear part of the hood 2, i.e. the part closest to the windscreen, is raised as shown in Figure 2. The vehicle comprises a front bumper 4, arranged at the lower front of the vehicle 1.

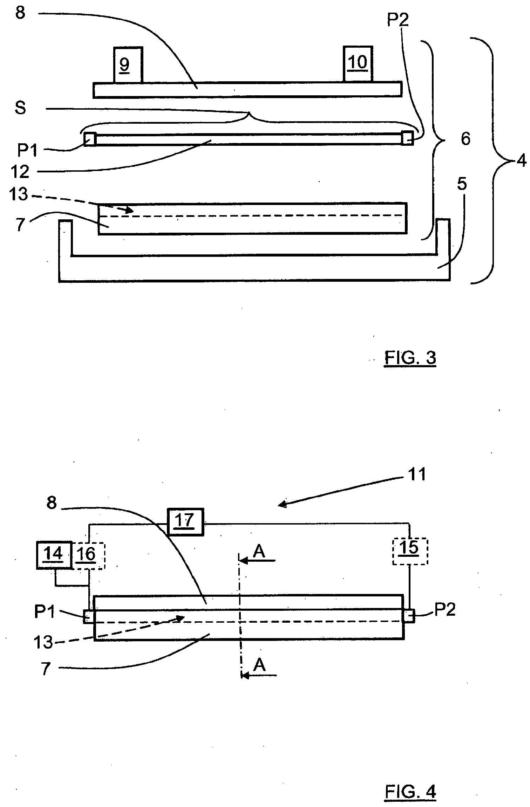

With reference to Figure 3 and Figure 4, the bumper 4 comprises a bumper cover 5 and a bumper body 6, the bumper body 6 being constituted by a layer of absorbing material 7, such as foam, a metal beam 8 and so-called crash boxes 9, 10, the latter being mounted to the vehicle chassis.

Figure 3 shows the different parts mentioned above, and Figure 4 shows them assembled, except the bumper cover 5.

Between the absorbing material 7 and the metal beam 8, a sensor device S is positioned.

The bumper cover 5 is displaceable and deformable towards the bumper body 6 such that the absorbing material 7 is pressed against the sensor device S in the event of an impact with a pedestrian.

According to the present invention, the sensor device S comprises a microwave conductor arrangement, arranged for conducting electromagnetic energy in the microwave range, having a first port P1 and a second port P2. The sensor device S further comprises a signal generator 14 and a first signal detector 15. The microwave conductor arrangement can be made in several different ways, as will be described in the following.

With reference to Figure 3, Figure 4 and Figure 5, the microwave conductor arrangement is in the form of a hollow rectangular waveguide 12 with metallic walls, running in a corresponding longitudinally extending channel 13 in the absorbing material 7. The waveguide 12 extends along the absorbing material. When mounted, the waveguide 12 is thus positioned in the channel 13 such that it faces and possibly is in contact with the metal beam 8.

The dimensions of the waveguide are such that the generated signal may propagate in the waveguide 12.

According to a first example, the signal generator 14 is connected to the first port P1 and the first signal detector 15 is connected to the second port P2, such that the first signal detector 15 may detect properties of the received signal.

According to a second example, the signal generator 14 is connected to the first port P1 and second signal detector 16 is connected to the first port P1 as well, such that the second signal detector 16 may detect reflection and voltage standing wave ratio. In this case, the second port P2 is either shorted, terminated or open.

According to a third example, the signal generator 14 is connected to the first port P1, the second signal detector 16 is connected to the first port P1 as well, and the first signal detector 15 is connected to the second port P2 such that the signal detectors 15, 16 may detect at least one of transmission properties, reflection, voltage standing wave ratio and electrical energy (Voltage/Current).

The three examples above relate to all types of microwave conductor arrangements according to the present invention. In order to indicate the different examples above in Figure 4, the signal detectors 15, 16 are indicated with dashed boxes.

In the event of a collision with a pedestrian, the bumper cover 5 is displaced and/or deformed such that the absorbing material 7 presses against the waveguide 12 such that its shape is changed. This is immediately indicated by means of a change to the detected values of those of transmission properties, reflection, voltage standing wave ratio, electrical energy and possibly also signal run time, if signal pulses are used, that are detected. An electronic control unit 17 receives data from the present signal detectors and uses the data for determining that a pedestrian accident has occurred and at which position on the bumper 4 the pedestrian has been hit. The determined information is used at the next step where the control unit 17 activates protective devices such as a hood lifter and windscreen airbags (not shown) . For example, different windscreen airbags could be activated in dependence of the position on the bumper 4 where the pedestrian has been hit.

It is to be noted that Figure 4 depicts the channel in the absorbing material, but not any specific arrangement placed in the channel, such as the waveguide 12 above. Figure 4 is therefore to be regarded as a generic drawing which is used for illustrating several embodiment examples in the following.

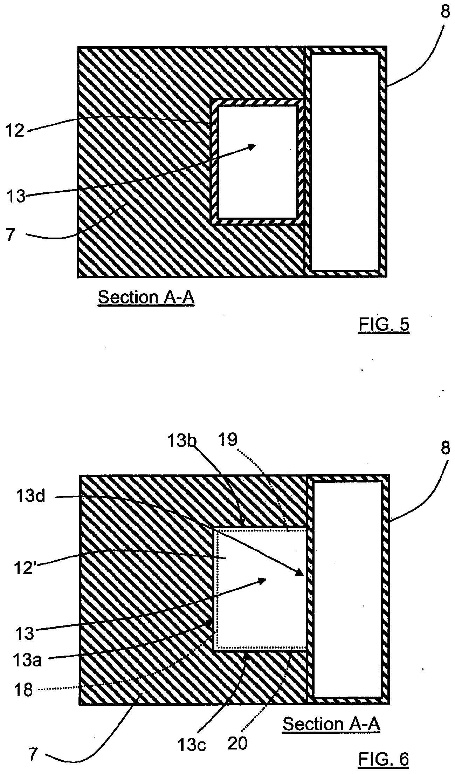

As a second waveguide alternative, with reference to Figure 4 and Figure 6, the waveguide 12' may be constituted by metallizations 18, 19, 20 on the channel walls together with the metal beam 8, the absorbing material 7 being mounted against the metal beam 8 such that the metal beam 8 closes the waveguide 12'. More specifically, the channel 13 comprises a first inner wall 13a, a second inner wall 13b, a third inner wall 13c and an open side 13d, the first inner wall 13a being perpendicular to the mutually parallel second inner wall 13b and third inner wall 13c. The first inner wall 13a, second inner wall 13b and third inner wall 13c are coated with corresponding electrically conducting layers 18, 19, 20 such as metal films. The open side 13d of the channel 13 is closed by means of the metal beam 8 such that the waveguide 12' is formed, a sufficient electrical contact being present between the metal beam 8 and the metallizations 18, 19, 20, for example by means of electrically conducting glue or springloaded contact fingers (not shown) which are well known in the art. The metallizations 18, 19, 20 are preferably formed in one piece, possibly steamed onto the inner walls 13a, 13b, 13c.

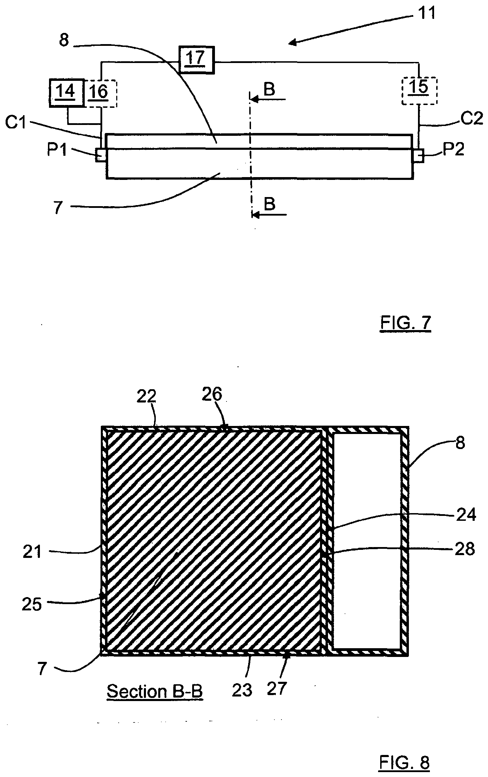

Figure 7 corresponds to Figure 4, but lacks the channel 13 in the absorbing material 7. As a third waveguide alternative, with reference to Figure 7 and Figure 8, the waveguide may be constituted by metallizations 21, 22, 23, 24 formed on the outer longitudinally extending walls 25, 26, 27, 28 of the absorbing material 7, such that the absorbing material 7 forms a dielectric media through with the transmitted signal is arranged to propagate. In this example, there need not be any channel in the absorbing material, as indicated in Figure 7 and Figure 8.

Instead of a waveguide, a stripline arrangement or a microstrip arrangement may constitute the microwave conductor arrangement.

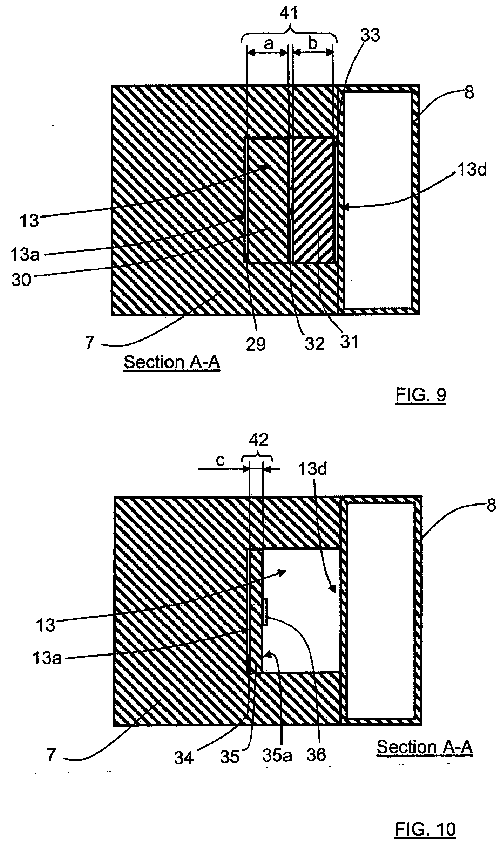

A stripline conductor is a metallic strip that is placed between a first ground plane and second ground plane with dielectric carrier materials sandwiched between them. In this case, with reference to Figure 3 and Figure 9, a first ground plane 29 is a metallic coating on the bottom of the channel 13, its first wall 13a, and a first dielectric carrier material 30, having a first thickness a, and a second dielectric carrier material 31, having a second thickness b, are positioned in the channel 13, filling it. Between the dielectric carrier materials 30, 31, a stripline conductor 32 is positioned, and outside the second dielectric carrier 31 material, a second ground plane 33 is positioned, either in the form of a metallic coating on the second dielectric carrier material 31 as shown in Figure 9, or being constituted by the metal beam 8. Thus, in the channel 13, from the first side 13a towards the open side 13d, a stripline arrangement 41 comprises the first ground plane 29, the first dielectric carrier material 30, the stripline conductor 32, the second dielectric carrier 31 and the second ground plane 33 are positioned.

A microstrip conductor is a metallic strip that is placed in the vicinity of a ground plane with a dielectric carrier material between them. In this case, with reference to Figure 3 and Figure 10, a first ground plane 34 is a metallic coating on the bottom of the channel 13, its first wall 13a, and a first dielectric carrier material 35, having a thickness c, is positioned in the channel 13, on the first ground plane 34. On a first side 35a of the first dielectric carrier material 35, facing away from the first ground plane 34, a microstrip conductor 36 is positioned. Thus, in the channel 13, from the first side 13a towards the open side 13d, a microstrip arrangement 42 comprises the first ground plane 34, the first dielectric carrier material 35 and microstrip conductor are positioned.

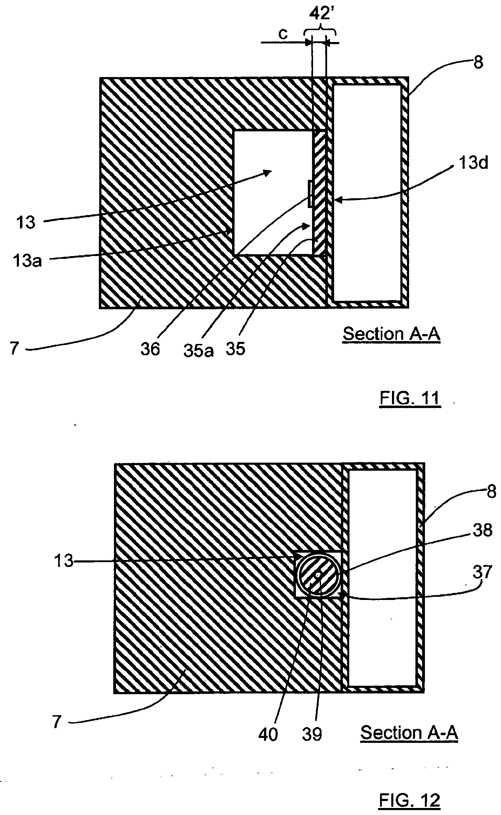

Alternatively, with reference to Figure 3 and Figure 11, an alternative microstrip arrangement 42' is shown where the metal beam 8 forms the first ground plane 34'. In this case, the order in the channel 13 is reversed.

The dielectric materials may be constituted by traditional dielectric carrier materials such as PTFE-based (Polytetrafluorethylene) materials, or by the same material as the absorbing material. It is, however, important that the thickness a, b; c of the respective dielectric carrier material 30, 31; 35, constituting the distance between the respective conductor 32, 36 and ground plane 29, 33; 34, 34', as well as the dielectric properties of the carrier material 30, 31; 35, are maintained at predetermined constant values in order to maintain the characteristic impedance of the conductors 32, 36.

If an impact occurs, however, these distances a, b; c are altered and the characteristic impedance of the corresponding conductor 32, 36 is changed, immediately resulting in that the transmission properties, reflection, voltage standing wave and transmitted electrical energy are altered, which is detected as an indication of that the impact has occurred.

Instead of the above, a coaxial conductor 37 may be used as microwave conductor arrangement instead, as shown in Figure 12. The coaxial conductor 37 comprises an outer circumferential ground 38 and an inner centre conductor 39, where these are separated by a dielectric material 40.

The present invention is not limited to the examples above, but may vary freely within the scope of the dependent claims. For example, the waveguide 14 may be made in solid metal, or as a metallic coating on inner walls of a plastic tube. The waveguides described may have any type of cross-section such as a circular cross-section or a polygonal cross-section, as well as the described rectangular cross-section. Basically, a signal conductive reflection between two appropriate surfaces is needed.

The bumper cover 5, the absorbing material 7 and the metal beam 8 may have slightly bent and/or rounded shapes, but have a respective longitudinal extension that mainly extends across the forward direction of movement D.

The metal beam 8 is generally constituted by a vehicle bumper beam 8, which may be made in any suitable material, depending on the desired functionality. When used as a ground plane, at least a suitable metallization is needed.

The absorbing material 7 may be constituted by any suitable foam or rubber compound, and may comprise one or more cavities or walls. The bumper cover 5 may be integrated with the absorbing material 7.

The essence of the present invention is to use a microwave conductor arrangement 12, 12', 37, 41, 42, 42', having a certain characteristic impedance and being placed in association with the front bumper 4 of a vehicle 1. The characteristic impedance is immediately changed if an impact occurs at the front bumper 4 due to the fact that the physical arrangement of the microwave conductor arrangement such as distances to ground planes or waveguide dimensions are altered due to the impact force. This is detected without any practically significant delay.

In the cases where waveguides are used, the ports P1, P2 may be constituted by coax/waveguide transitions. Where stripline, microstrip or coaxial conductors are used, the ports P1, P2 may be constituted by suitable coaxial connectors. Coaxial cables C1, C2 may be used to connect the ports P1, P2 to the corresponding signal detectors 15, 16 and transmitter 14.

The control unit 17, the signal detectors 15, 16 used and possibly also the transmitter 14 may be formed as one integrated unit.

The microstrip conductor 36 and stripline conductor 32 are both in the form of a conducting strip, as common in the art. The strip may be etched from a metal coating on one of the dielectric carrier materials.

The transmitted microwave signal may be in the form a continuous wave, single pulse or burst pulse.

In addition, the sensor system may be arranged for self-monitoring, i.e. when the vehicle is being used, the sensor system's microwave signals are monitored regularly for inconsistencies.

Alternatively, a combined signal generator and detector may be positioned along a waveguide, for example in the middle of the waveguide. In that case, the waveguide ends are closed and thus reflect a transmitted signal back to the detector.

## Claims

1. A vehicle impact sensor arrangement adapted to detect an impact between a vehicle (1) and a pedestrian, the vehicle (1) having a forward direction of movement (D), the sensor arrangement (11) comprising a vehicle bumper absorbing material (7) and a vehicle bumper beam (8) which have a respective longitudinal extension that mainly extends across the forward direction of movement (D), the sensor arrangement (11) further comprising a sensor device (S), **characterized in that** the sensor device (S) comprises a microwave conductor arrangement (12, 12', 37, 41, 42, 42'), the microwave conductor arrangement (12, 12', 37, 41, 42, 42') having a first port (P1) and a second port (P2), and being arranged for conducting electromagnetic energy, the sensor arrangement (11) further comprising a microwave signal generator (14) and at least one microwave signal receiver (15, 16), where the microwave conductor arrangement (12, 12', 37, 41, 42, 42') is arranged to have its characteristic impedance changed in the event of an impact.

2. A vehicle impact sensor arrangement according to claim 1, **characterized in that** the microwave conductor arrangement is in the form of a waveguide (12, 12'), the waveguide (12, 12') having a longitudinal extension that mainly extends across the forward direction of movement (D).

3. A vehicle impact sensor arrangement according to claim 2, **characterized in that** the waveguide (12, 12') is positioned in a channel (13) in the absorbing material (7).

4. A vehicle impact sensor arrangement according to claim 3, **characterized in that** the channel (13) comprises a first inner wall (13a), a second inner wall (13b), a third inner wall (13c) and an open side (13d), the first inner wall (13a) being perpendicular to the mutually parallel second inner wall (13b) and third inner wall (13c), the first inner wall (13a), second inner wall (13b) and third inner wall (13c) being coated with an electrically conducting layer (18, 19, 20) and the open side (13d) of the channel (13) being closed by means of the vehicle bumper beam (8) such that the waveguide (12') is formed.

5. A vehicle impact sensor arrangement according to claim 2, **characterized in that** the absorbing material (7) forms a dielectric media through which the transmitted signal is arranged to propagate.

6. A vehicle impact sensor arrangement according to claim 1, **characterized in that** the microwave conductor arrangement (41, 42, 42') is positioned in a channel (13) in the absorbing material (7), the channel (13) comprising a first inner wall (13a), a second inner wall (13b), a third inner wall (13c) and an open side (13d), the first inner wall (13a) being perpendicular to the mutually parallel second inner wall (13b) and third inner wall (13c), where, between the first inner wall (13a) and the open side (13d), a first ground plane (29, 34), a first dielectric carrier material (30, 35) and a conducting strip (32, 36) are positioned.

7. A vehicle impact sensor arrangement according to claim 6, **characterized in that** continuing from the conducting strip (32), a second dielectric carrier material (31) and a second ground plane (33) are positioned, such that the conducting strip (32) forms a stripline conductor.

8. A vehicle impact sensor arrangement according to claim 1, **characterized in that** the microwave conductor arrangement is constituted by a coaxial conductor (37) which comprises an outer circumferential ground (38) and an inner conductor (39), where these are separated by a dielectric material (40).

9. A vehicle impact sensor arrangement according to any one of the previous claims, **characterized in that** the microwave signal generator (14) is connected to the first port (P1) of the microwave conductor arrangement and that the first microwave signal receiver (15) is connected to the second port (P2) of the microwave conductor arrangement.

10. A vehicle impact sensor arrangement according to any one of the previous claims 1-8, **characterized in that** the microwave signal generator (14) and a second microwave signal receiver (16) are connected to the first port (P1) of the microwave conductor arrangement.

11. A vehicle impact sensor arrangement according to claim 10, **characterized in that** the first microwave signal receiver (15) is connected to the second port (P2) of the microwave conductor arrangement.

## Patentansprüche

1. Fahrzeug-Aufprallsensoranordnung, die so ausgelegt ist, dass sie einen Zusammenstoß zwischen einem Fahrzeug (1) und einem Fußgänger erfasst, wobei das Fahrzeug (1) eine Vorwärtsbewegungsrichtung (D) aufweist, die Sensoranordnung (11) ein Fahrzeugstoßfänger-Absorptionsmaterial (7) und einen Fahrzeugstoßfängerträger (8) umfasst, die eine jeweilige Längsausdehnung aufweisen, die hauptsächlich quer über die Vorwärtsbewegungsrichtung (D) verläuft, wobei die Sensoranordnung (11) ferner eine Sensoreinrichtung (S) umfasst, **dadurch gekennzeichnet, dass** die Sensoreinrichtung (S) eine Mikrowellenleiteranordnung (12, 12', 37, 41, 42, 42') umfasst, wobei die Mikrowellenleiteranordnung (12, 12', 37, 41, 42, 42') einen ersten Anschluss (P1) und einen zweiten Anschluss (P2) aufweist und so angeordnet ist, dass sie elektromagnetische Energie leitet, die Sensoranordnung (11) ferner einen Mikrowellensignalgenerator (14) und mindestens einen Mikrowellensignalempfänger (15, 16) umfasst und wobei die Mikrowellenleiteranordnung (12, 12', 37, 41, 42, 42') so angeordnet ist, dass ihr Wellenwiderstand im Falle eines Aufpralls verändert wird.

2. Fahrzeug-Aufprallsensoranordnung nach Anspruch 1, **dadurch gekennzeichnet, dass** die Mikrowellenleiteranordnung in Form eines Wellenleiters (12, 12') vorliegt, wobei der Wellenleiter (12, 12') eine Längsausdehnung aufweist, die hauptsächlich quer über die Vorwärtsbewegungsrichtung (D) verläuft.

3. Fahrzeug-Aufprallsensoranordnung nach Anspruch 2, **dadurch gekennzeichnet, dass** der Wellenleiter (12, 12') in einem Kanal (13) im Absorptionsmaterial (7) platziert ist.

4. Fahrzeug-Aufprallsensoranordnung nach Anspruch 3, **dadurch gekennzeichnet, dass** der Kanal (13) eine erste Innenwand (13a), eine zweite Innenwand (13b), eine dritte Innenwand (13c) und eine offene Seite (13d) umfasst, wobei die erste Innenwand (13a) senkrecht zur zweiten Innenwand (13b) und dritten Innenwand (13c) verläuft, die zueinander parallel verlaufen, wobei die erste Innenwand (13a), zweite Innenwand (13b) und dritte Innenwand (13c) mit einer elektrisch leitenden Schicht (18, 19, 20) beschichtet sind und die offene Seite (13d) des Kanals (13) derart durch den Fahrzeugstoßfängerträger (8) verschlossen ist, dass der Wellenleiter (12') gebildet wird.

5. Fahrzeug-Aufprallsensoranordnung nach Anspruch 2, **dadurch gekennzeichnet, dass** das Absorptionsmaterial (7) ein dielektrisches Medium bildet, durch das das gesendete Signal auslegungsgemäß übertragen wird.

6. Fahrzeug-Aufprallsensoranordnung nach Anspruch 1, **dadurch gekennzeichnet, dass** die Mikrowellenleiteranordnung (41, 42, 42') in einem Kanal (13) im Absorptionsmaterial (7) platziert ist, wobei der Kanal (13) eine erste Innenwand (13a), eine zweite Innenwand (13b), eine dritte Innenwand (13c) und eine offene Seite (13d) umfasst, wobei die erste Innenwand (13a) senkrecht zur zweiten Innenwand (13b) und dritten Innenwand (13c) verläuft, die zueinander parallel verlaufen, wobei zwischen der ersten Innenwand (13a) und der offenen Seite (13d) eine erste Masseebene (29,34), ein erstes dielektrisches Trägermaterial (30, 35) und ein leitender Streifen (32, 36) platziert sind.

7. Fahrzeug-Aufprallsensoranordnung nach Anspruch 6, **dadurch gekennzeichnet, dass** vom leitenden Streifen (32) aus weiter verlaufend ein zweites dielektrisches Trägermaterial (31) und eine zweite Masseebene (33) derart platziert sind, dass der leitende Streifen (32) einen Leiter einer Streifenleitung bildet.

8. Fahrzeug-Aufprallsensoranordnung nach Anspruch 1, **dadurch gekennzeichnet, dass** die Mikrowellenleiteranordnung von einem Koaxialleiter (37) gebildet wird, der eine Außenumfangsmasse (38) und einen Innenleiter (39) umfasst, wobei diese durch ein dielektrisches Material (40) getrennt sind.

9. Fahrzeug-Aufprallsensoranordnung nach einem der vorhergehenden Ansprüche, **dadurch gekennzeichnet, dass** der Mikrowellensignalgenerator (14) mit dem ersten Anschluss (P1) der Mikrowellenleiteranordnung verbunden ist und dass der erste Mikrowellensignalempfänger (15) mit dem zweiten Anschluss (P2) der Mikrowellenleiteranordnung verbunden ist.

10. Fahrzeug-Aufprallsensoranordnung nach einem der Ansprüche 1 bis 8, **dadurch gekennzeichnet, dass** der Mikrowellensignalgenerator (14) und ein zweiter Mikrowellensignalempfänger (16) mit dem ersten Anschluss (P1) der Mikrowellenleiteranordnung verbunden sind.

11. Fahrzeug-Aufprallsensoranordnung nach Anspruch 10, **dadurch gekennzeichnet, dass** der erste Mikrowellensignalempfänger (15) mit dem zweiten Anschluss (P2) der Mikrowellenleiteranordnung verbunden ist.

## Revendications

1. Agencement de capteur d'impact pour véhicule, adapté pour détecter un impact entre un véhicule (1) et un piéton, le véhicule (1) ayant une direction de mouvement vers l'avant (D), l'agencement de capteur (11) comprenant un matériau amortisseur (7) de pare-chocs de véhicule et une poutre de pare-chocs de véhicule (8) qui présentent une extension longitudinale respective qui s'étend principalement en travers de la direction de mouvement vers l'avant (D), l'agencement de capteur (11) comprenant en outre un dispositif capteur (S), **caractérisé en ce que** le dispositif capteur (S) comprend un agencement conducteur d'hyperfréquences (12, 12', 37, 41, 42, 42'), l'agencement conducteur d'hyperfréquences (12, 12', 37, 41, 42, 42') comportant un premier port (P1) et un second port (P2), et étant agencé pour conduire de l'énergie électromagnétique, l'agencement de capteur (11) comprenant en outre un générateur de signal hyperfréquence (14) et au moins un récepteur de signal hyperfréquence (15, 16), l'agencement conducteur d'hyperfréquences (12, 12', 37, 41, 42, 42') étant agencé pour que son impédance caractéristique soit modifiée dans le cas d'un impact.

2. Agencement de capteur d'impact pour véhicule selon la revendication 1, **caractérisé en ce que** l'agencement conducteur d'hyperfréquences se présente sous la forme d'un guide d'ondes (12, 12'), le guide d'ondes (12, 12') présentant une extension longitudinale qui s'étend principalement en travers de la direction de mouvement vers l'avant (D).

3. Agencement de capteur d'impact pour véhicule selon la revendication 2, **caractérisé en ce que** le guide d'ondes (12, 12') est positionné dans un canal (13) dans le matériau amortisseur (7).

4. Agencement de capteur d'impact pour véhicule selon la revendication 3, **caractérisé en ce que** le canal (13) comprend une première paroi intérieure (13a), une deuxième paroi intérieure (13b), une troisième paroi intérieure (13c) et un côté ouvert (13d), la première paroi intérieure (13a) étant perpendiculaire à la deuxième paroi intérieure (13b) et la troisième paroi intérieure (13c), qui sont parallèles entre elles, la première paroi intérieure (13a), la deuxième paroi intérieure (13b) et la troisième paroi intérieure (13c) étant revêtues d'une couche électriquement conductrice (18, 19, 20) et le côté ouvert (13d) du canal (13) étant fermé au moyen de la poutre de pare-chocs de véhicule (8) de manière à former le guide d'ondes (12').

5. Agencement de capteur d'impact pour véhicule selon la revendication 2, **caractérisé en ce que** le matériau amortisseur (7) forme un milieu diélectrique à travers lequel le signal transmis est agencé pour se propager.

6. Agencement de capteur d'impact pour véhicule selon la revendication 1, **caractérisé en ce que** l'agencement conducteur d'hyperfréquences (41, 42, 42') est positionné dans un canal (13) dans le matériau amortisseur (7), le canal (13) comprenant une première paroi intérieure (13a), une deuxième paroi intérieure (13b), une troisième paroi intérieure (13c) et un côté ouvert (13d), la première paroi intérieure (13a) étant perpendiculaire à la deuxième paroi intérieure (13b) et la troisième paroi intérieure (13c), qui sont parallèles entre elles, un premier plan de masse (29, 34), un premier matériau de support diélectrique (30, 35) et une bande conductrice (32, 36) étant positionnés entre la première paroi intérieure (13a) et le côté ouvert (13d).

7. Agencement de capteur d'impact pour véhicule selon la revendication 6, **caractérisé en ce que,** en continuant à partir de la bande conductrice (32), un second matériau de support diélectrique (31) et un second plan de masse (33) sont positionnés, de telle sorte que la bande conductrice (32) forme un conducteur de ligne à rubans.

8. Agencement de capteur d'impact pour véhicule selon la revendication 1, **caractérisé en ce que** l'agencement conducteur d'hyperfréquences est constitué d'un conducteur coaxial (37) qui comprend une masse circonférentielle extérieure (38) et un conducteur intérieur (39), ceux-ci étant séparés par un matériau diélectrique (40).

9. Agencement de capteur d'impact pour véhicule selon l'une quelconque des revendications précédentes, **caractérisé en ce que** le générateur de signal hyperfréquence (14) est raccordé au premier port (P1) de l'agencement conducteur d'hyperfréquences et **en ce que** le premier récepteur de signal hyperfréquence (15) est raccordé au second port (P2) de l'agencement conducteur d'hyperfréquences.

10. Agencement de capteur d'impact pour véhicule selon l'une quelconque des revendications précédentes 1 à 8, **caractérisé en ce que** le générateur de signal hyperfréquence (14) et un second récepteur de signal hyperfréquence (16) sont raccordés au premier port (P1) de l'agencement conducteur d'hyperfréquences.

11. Agencement de capteur d'impact pour véhicule selon la revendication 10, **caractérisé en ce que** le premier récepteur de signal hyperfréquence (15) est raccordé au second port (P2) de l'agencement conducteur d'hyperfréquences.
